# EUROPÄISCHE PATENTANMELDUNG

(11) **EP 3 178 543 A1**
(43) Veröffentlichungstag der Anmeldung: **14.06.2017**
(21) Anmeldenummer: 16188394.7
(22) Anmeldetag: 12.09.2016
(51) Int. Cl.: B01F 3/04, C02F 3/20

(54) **DOMBELÜFTER**

(30) Priorität: 11.12.2015 DE 102015121608
(71) Anmelder: Scheefeldt, Manfred, 44579 Castrop-Rauxel (DE)
(72) Erfinder: Scheefeldt, Manfred, 44579 Castrop-Rauxel (DE)
(74) Vertreter: Meinke, Jochen

(57) **Zusammenfassung**

Mit einem Dombelüfter (1), wobei dieser einen Dom (2) mit einer ersten Bohrung (3) und einen Teller (4) mit einer zweiten Bohrung (5) aufweist, wobei der Dom (2) und der Teller (4) einen Belüftungsraum (6) bilden und die erste Bohrung (3) eine Gewindeschraube (7) aufnimmt, wobei die zweite Bohrung (5) ein hülsenförmiges Distanzstück (8) mit einem Belüftungskanal (9) aufnimmt und das Distanzstück (8) in den Belüftungsraum (6) ragt, soll der Energiebedarf einer Kläranlage erheblich gesenkt und dadurch die Umweltbelastung, insbesondere die CO₂-Belastung, reduziert werden, die durch die Energiebereitstellung entsteht.

Dies wird dadurch erreicht, dass das Distanzstück (8) wenigstens ein in den Belüftungsraum (6) mündendes Belüftungsloch (10a) aufweist, wobei das Belüftungsloch (10a) mit dem Belüftungskanal (9) verbunden ist und das Distanzstück (8) in Einbaulage oberhalb des Belüftungslochs (10a) eine Gewindebohrung (11) aufweist, welche die Gewindeschraube (7) aufnimmt, wobei der Durchmesser des Belüftungskanals (9) und des Belüftungslochs (10a) mindestens so groß ist wie der Durchmesser der Gewindeschraube (7).

## Beschreibung

Die Erfindung betrifft einen Dombelüfter, wobei dieser einen Dom mit einer ersten Bohrung und einen Teller mit einer zweiten Bohrung aufweist, wobei der Dom und der Teller einen Belüftungsraum bilden und die erste Bohrung eine Gewindeschraube aufnimmt.

In Kläranlagen erfolgt die biologische Abwasserreinigung in Belebungsbecken, in denen Bakterien und Mikroorganismen die gelösten Schmutzstoffe des Abwassers abbauen. Für den Abbauprozess wird Sauerstoff als Energiequelle benötigt. Eine ausreichende Sauerstoffzufuhr wird mit einem Belüftungssystem sichergestellt. Dazu gehören in den Belebungsbecken Luftverteilerleitungen und Verteilerleitungen (Verteilerbalken) bzw. Belüftungsrohre, die Belüftungsöffnungen aufweisen, an denen Dombelüfter befestigt sind. Solche Dombelüfter sind aus DE 32 05 237 A1 bekannt. Die Dombelüfter werden üblicherweise mit einer Gewindeschraube, die durch die Bohrungen des Doms und des Tellers geführt ist, mit der Belüftungsöffnung lösbar verbunden. Um eine Belüftung des Belebtschlamm-/Wassergemisches zu ermöglichen, weist die Gewindeschraube eine Längsbohrung auf, die in einer Querbohrung mündet. Die Längs- und Querbohrung bilden einen Kanal, durch den die über ein Gebläse der Kläranlage erzeugte Druckluft über einen Verteilerbalken bzw. ein Belüftungsrohr in den Belüftungsraum des Dombelüfters strömen kann. Typischerweise werden M12-Gewindeschrauben eingesetzt, wobei die Bohrungen einen Durchmesser von 6,5 mm aufweisen. Die zugeführte Luft bzw. Frischluft, die in den Belüftungsraum strömt, wird durch den Dom, der aus feinporiger Keramik besteht, in Form von feinperligen Luftblasen an das Wasser abgegeben. Die Luftblasen ihrerseits geben beim Aufstieg an die Wasseroberfläche den enthaltenen Sauerstoff ans Wasser ab und versorgen somit die Mikroorganismen im Belebtschlamm.

Nachteilig an diesem Dombelüfter ist jedoch der kleine Durchmesser der Längs- und Querbohrung der Gewindeschraube. Dieser kleine Durchmesser der Bohrungen haben erhebliche Druckverluste zur Folge, die gleichbedeutend mit Energieverlusten sind. In einer Kläranlage mit Druckluftbelüftung sind mehrere hundert bis tausende Dombelüfter je nach Anlagengröße vorhanden. Dabei führen die Druckverluste zu enormen Energiekosten und daher auch zu einer erheblichen Belastung der Umwelt.

Die Druckschriften GB 60 50 46 A und US 26 39 131 A beschreiben jeweils Dombelüfter, bei denen ein Dom und ein Teller mittels einer Verschraubung an einem Belüftungsrohr befestigt sind.

Die Druckschriften US 50 51 193 A und US 82 76 840 B1 beschreiben jeweils einen Dombelüfter oder ähnliche Druckbelüftungssysteme, deren Verschmutzung mittels Drucksensoren kontrolliert wird.

Aufgabe der Erfindung ist es daher, einen Dombelüfter der eingangs bezeichneten Art anzugeben, der den Energiebedarf einer Kläranlage erheblich senkt und dadurch die Umweltbelastung, insbesondere die CO₂-Belastung, reduziert, die durch die Energiebereitstellung entsteht.

Diese Aufgabe wird bei einem Dombelüfter der eingangs bezeichneten Art erfindungsgemäß mit den Merkmalen des Schutzanspruches 1 gelöst.

Es wird somit ein Dombelüfter zur Verfügung gestellt, der die Druckverluste deutlich reduziert, da die Druck- bzw. Frischluft nicht einen schmalen Kanal der Gewindeschraube durchströmt, sondern durch den Belüftungskanal des hülsenförmigen Distanzstückes strömt. Da dieses Distanzstück einen größeren Durchmesser aufweist als die Gewindeschraube, ist der Durchmesser des Belüftungskanals und des Belüftungslochs mindestens so groß wie der Durchmesser der Gewindeschraube. Ein weiterer Vorteil ist, dass durch die besondere Ausgestaltung des hülsenförmige Distanzstücks bestehende Dombelüfter nachträglich umgerüstet werden können und somit auch älteren Kläranlagen die Möglichkeit eröffnet wird, ihren Energiebedarf zu reduzieren.

Ausgestaltungen der Erfindung ergeben sich aus den Unteransprüchen. Dabei ist zweckmäßig, dass der Belüftungskanal in die Gewindebohrung übergeht. Vorteilhaft hieran ist, dass der Belüftungskanal als auch die Gewindebohrung ohne neue Ausrichtung des Werkstücks hergestellt werden können und folglich die Produktionskosten reduziert werden.

Weiter ist vorgesehen, dass der Belüftungskanal in Einbaulage vertikal verläuft und somit entlang der Strömungsrichtung der Frischluft ausgerichtet ist, wodurch der Strömungswiderstand auf ein Minimum reduziert.

Weiter, dass das Distanzstück mindestens zwei Belüftungslöcher aufweist, die mit dem Belüftungskanal verbunden sind. Durch mehrere Belüftungslöcher wird die Frischluft im Dom gleichmäßiger verteilt. Dies führt zu einem optimalen Blasenbild und zu einer besseren Versorgung der Mikroorganismen im Belebtschlammbecken.

In einer weiteren Ausgestaltung ist vorgesehen, dass in Einbaulage wenigstens ein Belüftungsloch seitlich am Distanzstück angeordnet ist, so dass sich die Druck- bzw. Frischluft um das hülsenförmige Distanzstück im Belüftungsraum homogen verteilt.

Es ist besonders bevorzugt, dass wenigstens eines der Belüftungslöcher durch einen Abzweigungskanal mit dem Belüftungskanal verbunden ist, wobei der Abzweigungskanal in Einbaulage horizontal verläuft. Vorteilhaft an dieser Ausführungsform ist, dass der Abzweigungskanal und das Belüftungsloch einfach gefertigt werden können.

Als besonders vorteilhafte weitere Ausführungsform ist vorgesehen, dass wenigstens eines der Belüftungslöcher durch einen Abzweigungskanal mit dem Belüftungskanal verbunden ist, wobei der Abzweigungskanal in Einbaulage unter einem Winkel zur horizontalen Achse verläuft. Dabei ist besonders bevorzugt, dass der Abzweigungskanal oberhalb der horizontalen Achse verläuft und der Winkel 45° beträgt. Dies hat den Vorteil, dass der Strömungswiderstand für die Frischluft den Distanzstück weiter verringert wird und somit einen noch effizienteren Betrieb der Kläranlage ermöglicht.

Weiterhin ist vorgesehen, dass ein Sensor an oder in einem Belüftungsloch angeordnet ist. Da der Dombelüfter mit der Zeit verschmutzt und sich damit der Strömungswiderstand für die Frischluft erhöht, steigt mit der Zeit auch der Druckabfall in einem Dombelüfter. Der an dem Belüftungsloch angebrachte Sensor kann eine lokale Druckmessung durchführen, so dass die Dombelüfter entweder frühzeitig gereinigt oder ausgetauscht werden können. Da der Verschmutzungsgrad eines Dombelüfters auch von der Einbauposition im Becken abhängt, ist an einer flächendeckenden Druckmessung vorteilhaft, dass nur die Dombelüfter reinigt oder ausgetauscht werden, die besonders stark verschmutzt sind.

Es ist besonders bevorzugt, dass die in den Belüftungsraum hineinragende Schraubenspitze der Gewindeschraube kegelförmig, halbkugelförmig, kegelstumpfförmig oder konvex ausgebildet ist. Dies hat den Vorteil, dass die durchströmende Frischluft optimal durch das Zwischenstück geleitet wird und die Reibungsverluste reduziert werden.

Es ist besonders bevorzugt, dass im Belüftungsraum des Distanzstückes ein Strömungsteiler eingesetzt ist, der einen Hauptkanal sowie wenigstens zwei Nebenkanäle aufweist, wobei der Hauptkanal sich im Wesentlichen parallel zur vertikalen Achse erstreckt und in die beiden Nebenkanäle übergeht, die sich im Wesentlichen quer zur vertikalen Achse erstrecken und in den Belüftungslöchern münden. Hierdurch werden die Reibungsverluste der durchströmenden Frischluft weiter reduziert und somit der Energiebedarf der gesamten Anlage reduziert.

In einer weiteren Ausgestaltung ist vorgesehen, dass der Hauptkanal des Strömungsteilers eine Verjüngung aufweist. Mithilfe dieser Verjüngung wird gemäß des Venturi-Effektes eine Erhöhung der Strömungsgeschwindigkeit der Frischluft erzeugt und somit der Belüftungseffekt des Dombelüfters verbessert, da der Durchsatz der Frischluft durch den Dombelüfter steigt. Zusätzlich wird ein Unterdruck erzeugt, der einen ansaugenden Effekt auf die Frischluft ausübt.

Eine weitere vorteilhafte Ausführungsform der Erfindung sieht vor, dass der Strömungsteiler aus Kunststoff ist. Ein solcher Strömungsteiler lässt sich schnell und kostengünstig in einer hohen Stückzahl produzieren und senkt damit die Gesamtkosten des erfindungsgemäßen Dombelüfters.

Ferner ist bevorzugt vorgesehen, dass der Dombelüfter eine Befestigungsvorrichtung aufweist, die in der Belüftungsöffnung formschlüssig und/oder kraftschlüssig eingeklemmt ist, wobei die Befestigungsvorrichtung einen Auflageflansch aufweist, wobei die in Einbaulage untere Seite des Auflageflansches auf einem Rand der Belüftungsöffnung aufliegt. In eine derartig in der Belüftungsöffnung eingeklemmte Befestigungsvorrichtung lässt sich der Dombelüfter über ein Gewinde schnell und einfach befestigen. Durch den Verzicht auf eine Schweißnaht zwischen Befestigungsvorrichtung und Belüftungsrohr entfallen zudem die Probleme, die sich aus der Wärmezufuhr beim Schweißen ergeben. So führt eine erhöhte Wärmezufuhr regelmäßig dazu, dass sich die Belüftungsrohre beim Anschweißen der Befestigungsvorrichtung verziehen. Weiterhin entfällt das sehr aufwendige Beizen und Passivieren der Schweißstellen. Das form- und/oder kraftschlüssige Einklemmen der Befestigungsvorrichtung in der Belüftungsöffnung eines Belüftungsrohres ermöglicht es, auf diese komplizierten Schweißarbeiten am Grund des Belebungsbeckens zu verzichten. Zusätzlich ist eine einfache und sichere Festlegung der Befestigungsöffnung in der Belüftungsöffnung sichergestellt.

Eine weitere vorteilhafte Ausführungsform der Erfindung sieht vor, dass die Befestigungsvorrichtung eine außenseitige Wulst aufweist, mit welcher diese in der Belüftungsöffnung festgelegt ist. Eine solche Wulst stellt ein einfaches, aber geeignetes Mittel dar, die Befestigungsvorrichtung in der Belüftungsöffnung festzulegen.

Weiter vorteilhaft ist, dass die Wulst so ausgebildet ist, dass sie den Belüftungsöffnungsrand in Einbaulage von unten umschließt und den Belüftungsöffnungsrand gegen die Unterseite des Auflageflansches drückt. Durch diese Ausgestaltung ist eine einfache und besonders dichte Montage der Befestigungsvorrichtung in der Belüftungsöffnung gegeben. Die Befestigungsvorrichtung ist durch die Wulst und den Flansch, welche den Belüftungsöffnungsrand beidseitig umschließen, besonders sicher und beständig festgelegt.

Weitere Merkmale, Einzelheiten und Vorteile der Erfindung ergeben sich aufgrund der nachfolgenden Beschreibung sowie anhand der Zeichnungen. Einander entsprechende Gegenstände oder Elemente sind in allen Figuren mit dem gleichen Bezugszeichen versehen. Es zeigt
- Fig. 1: eine Schnittdarstellung eines erfindungsgemäßen Dombelüfters in Einbaulage, der an einem Belüftungsrohr befestigt ist,
- Fig. 2: ein Distanzstück mit zwei Abzweigungskanälen und zwei Belüftungslöchern,
- Fig. 3: eine Schnittdarstellung der A-A Linie der Fig. 2,
- Fig. 4: ein Distanzstück mit zwei unter einem Winkel zur horizontalen Achse verlaufenden Abzweigungskanälen und zwei Belüftungslöchern, wobei die gestrichelten Linien verdeckte Kanten darstellen und dadurch die Konturen der Abzweigungskanäle und Belüftungslöcher zusammenfallen,
- Fig. 5: eine Schnittdarstellung der A-A Linie der Fig. 4,
- Fig. 6: eine Schnittdarstellung eines Distanzstückes mit einem Sensor,
- Fig. 7: eine Schnittdarstellung eines Distanzstückes mit eingestecktem Strömungsteiler,
- Fig. 8: eine Schnittdarstellung des Strömungsteilers aus Fig. 7,
- Fig. 9: eine erfindungsgemäße Befestigungsvorrichtung mit Dombelüfter und Belüftungsrohr in Schnittdarstellung,
- Fig. 10: einen Befestigungsvorrichtungsrohling in perspektivischer Schnittdarstellung,
- Fig. 11: einen Ausschnitt des Befestigungsvorrichtungsrohlings,
- Fig. 12: einen Befestigungsvorrichtungsrohling in Schnittdarstellung.

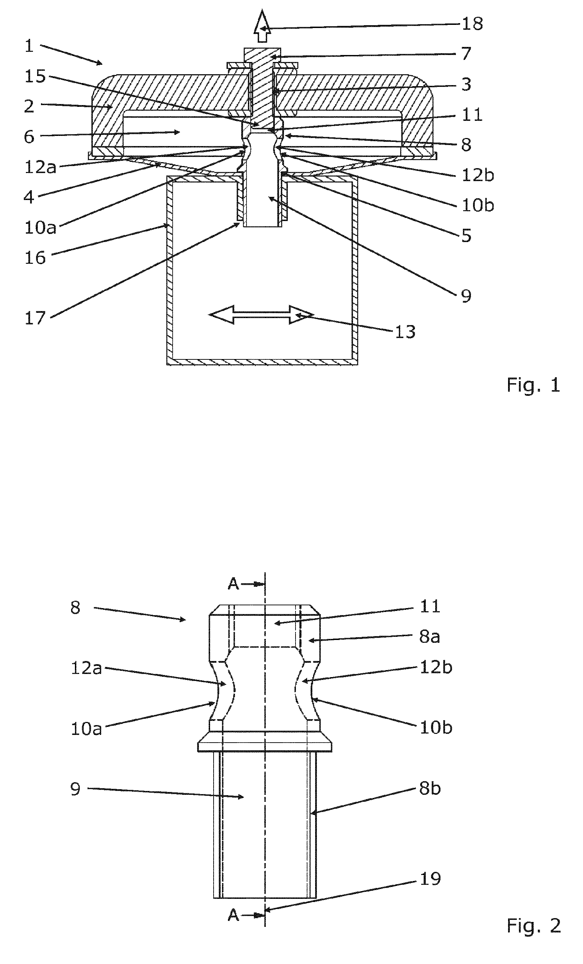

In Fig. 1 ist eine Schnittdarstellung eines erfindungsgemäßen Dombelüfters 1 gezeigt, der an einer Belüftungsöffnung 17 eines Belüftungsrohres 16 angebracht ist, wobei das Belüftungsrohr 16 mit einem nicht dargestellten Belüftungssystem verbunden ist. In der Einbaulage des Dombelüfters 1 verläuft die vertikale Achse 18 parallel zur Aufstiegsrichtung der Luftblasen in einem Becken ohne Strömung und die horizontale Achse 13 ist senkrecht zur vertikalen Achse 18 ausgerichtet. Der Dombelüfter 1 weist einen Dom 2 mit einer ersten Bohrung 3 und einen Teller 4 mit einer zweiten Bohrung 5 auf, wobei die zweite Bohrung 5 ein hülsenförmiges Distanzstück 8 aufnimmt. Das obere Ende 8a des Distanzstücks 8 weist eine vertikal verlaufende Gewindebohrung 11 auf und das untere Ende 8b des Distanzstücks 8 greift in die Belüftungsöffnung 17 ein und fixiert somit den Dombelüfter 1 im Belüftungsloch 16. Der Dom 2 ist mittels einer Gewindeschraube 7 über das Distanzstück 8 mit dem Teller 4 verbunden, wobei die Gewindeschraube 7 durch die erste Bohrung 3 geführt ist und in die Gewindebohrung 11 eingreift.

In dieser Ausführungsform ist die Schraubenspitze 15 stumpf ausgebildet und ragt nicht in dem Belüftungskanal 9. Der Dombelüfter 1 ist so ausgerichtet, dass die Längsachse 19 des Distanzstückes 8 parallel zur vertikalen Achse 18 verläuft.

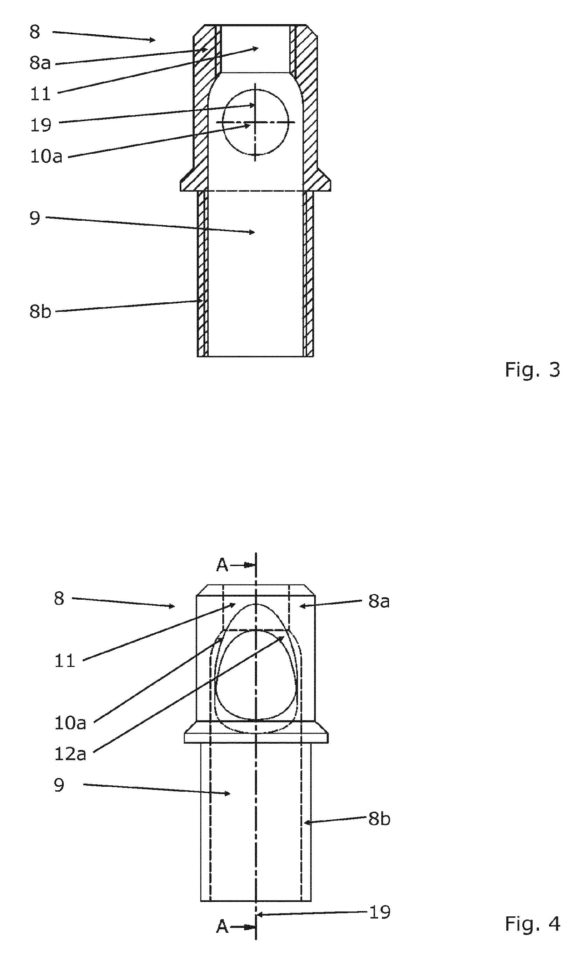

Das Distanzstück 8, das in Fig. 2 und Fig. 3 vergrößert dargestellt ist, weist einen vertikal verlaufenden Belüftungskanal 9 auf, der in zwei horizontal verlaufenden Abzweigungskanälen 12a und 12b mündet, die ihrerseits in den Belüftungslöchern 10a und 10b enden. In dieser Ausführungsform geht der Belüftungskanal 9 in die Gewindebohrung 11 über. Da die Belüftungslöcher 10a und 10b seitlich am Distanzstück 8 angeordnet sind, kann die Frischluft, die sich im Belüftungsrohre 16 ausbreitet, durch den Belüftungskanal 9, die Abzweigungskanäle 12a und 12b und die beiden Belüftungsöffnung 10a und 10b in den Belüftungsraum 6 strömen. Vom Belüftungsraum 6 ausgehend durchströmt die Frischluft den Dom 2, der vorzugsweise aus feinporiger Keramik besteht, und wird in Form von feinperligen Luftblasen an das Belebtschlamm-/Wassergemisch im Belebungsbecken abgegeben.

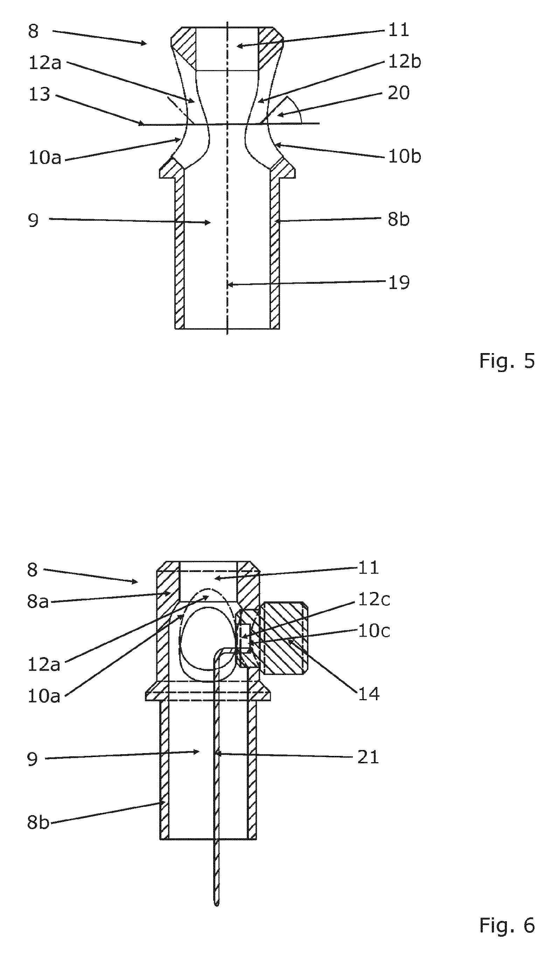

In Fig. 4 und Fig. 5 ist eine weitere Ausführungsform des Distanzstücks 8 gezeigt, wobei die Abzweigungskanäle 12a und 12b in Einbaulage unter einem Winkel 20 zur horizontalen Achse 13 verlaufen und oberhalb der horizontalen Achse 13 angeordnet sind. In Fig. 5 beträgt dieser Winkel 20 genau 45°, wobei der Winkel 20 vorzugsweise zwischen 20° und 80°, weiter vorzugsweise zwischen 30° und 50° liegt.

In Fig. 6 eine Schnittdarstellung eines Distanzstück 8 gezeigt, wobei zwei Belüftungslöcher 10a und 10c dargestellt sind, wobei das Belüftungsloch 10c mit einem Belüftungskanal 12c verbunden, der horizontal verläuft. In diesem Belüftungsloch 10c ist ein Sensor 14 angeordnet, der den Druck oder den Volumenstrom der Frischluft lokal misst. Der Sensor 14 ist durch eine Signalleitung 21, die durch den Belüftungskanal 9 verläuft, mit einem nicht dargestellten Messsystem verbunden.

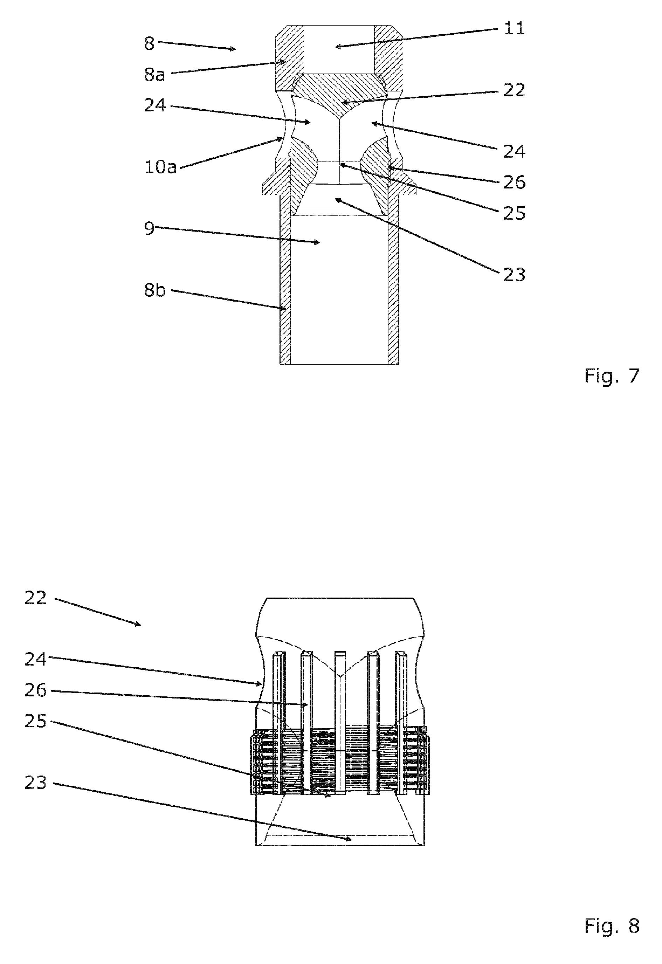

In Fig. 7 ist eine Schnittdarstellung eines Distanzstückes 8 mit eingestecktem Strömungsteiler 22 gezeigt. Dieser Strömungsteiler 22 ist zylindrisch ausgebildet und weist entlang seiner Axialachse einen Hauptkanal 23 auf, der in wenigstens einem Nebenkanal 24 mündet. Im Übergang zwischen dem Nebenkanal 24 und dem Hauptkanal 23 ist eine Verjüngung 25 vorgesehen. Der Strömungsteiler 22 ist so in das Distanzstück 8 eingesteckt, dass die durch den Lüftungskanal 9 durchströmende Frischluft durch den Hauptkanal 23 strömen muss und dabei durch die Nebenkanäle 24 in die Belüftungslöcher 10a, 10b oder 10c geleitet wird. Hierbei wird die Gewindebohrung 11 durch den Strömungsteller 22 luftdicht abgeschlossen, so dass auf eine zusätzliche Dichtung zwischen der Gewindeschraube 7 und dem Distanzstück 8 verzichtet werden kann.

In Fig. 8 eine Schnittdarstellung des Strömungsteilers aus Fig. 7 gezeigt. Hier ist zu erkennen, dass der Strömungsteiler 22 an seinen Außenflächen axial verlaufende Rippen 26 aufweist, die eine Einpressung des Strömungsteilers 22 in das Distanzstück 8 ermöglichen. Hierdurch wird gewährleistet, dass im Betrieb der Anlage der Strömungsteiler 22 im Distanzstück 8 nicht verrutscht und somit den Strömungswiderstand erhöht.

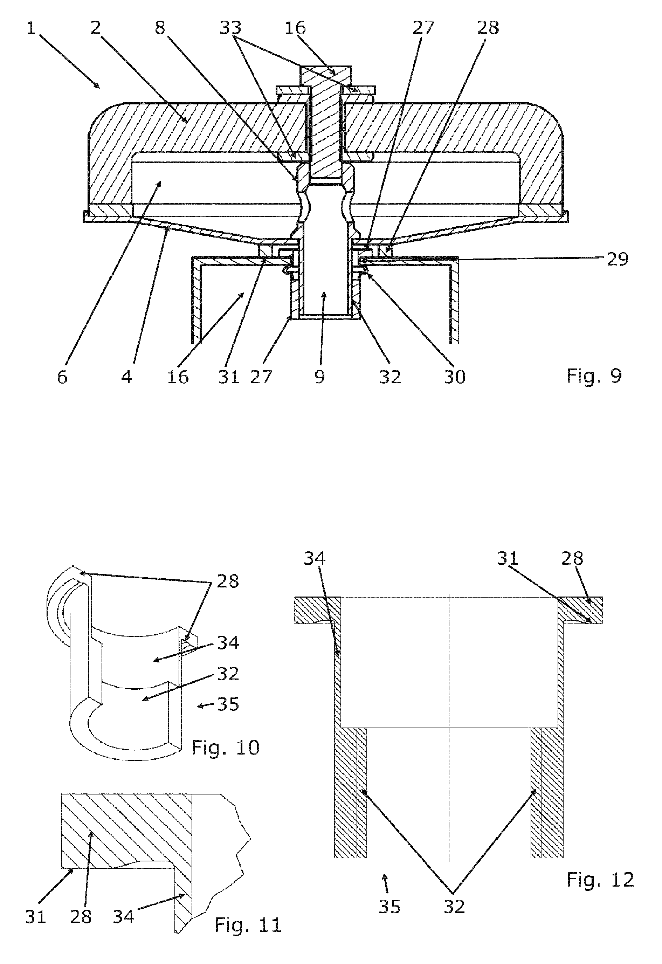

In Fig. 9 ist in Schnittdarstellung eine erfindungsgemäße Befestigungsvorrichtung 27 mit Dombelüfter 1 auf einem Belüftungsrohr 16 gezeigt. In der Schnittdarstellung ist besonders gut zu erkennen, dass der Dom 2 des Dombelüfters 1 mit dem Teller 4 einen Belüftungsraum 6 bildet, in dem die Luft aus dem Belüftungsrohr 16 durch die Belüftungsöffnung 17 eindringen kann. In dem Ausführungsbeispiel ist zu sehen, dass die Gewindeschraube 7 zur Befestigung des Domes 2 in einem Distanzstück 8 verschraubt ist, welches wiederum in dem Gewinde 32 der Befestigungsvorrichtung 27 verschraubt ist. Die Befestigungsvorrichtung 27 liegt durch ihren Auflageflansch 28 festgelegt in der Belüftungsöffnung 17 des Belüftungsrohres 16, in dem die Unterseite 31 des Auflageflansches 28 auf dem Rand 29 der Belüftungsöffnung 17 aufliegt. Die Wulst 30 unterhalb des Belüftungsöffnungsrandes 29 umschließt in Einbaulage von unten den Belüftungsöffnungsrand 29 und drückt diesen gegen die Unterseite 31 des Auflageflansches 28. Hierdurch ist die Befestigungsvorrichtung 27 fest und dicht in der Belüftungsöffnung 17 des Belüftungsrohres 16 festgelegt und der Dombelüfter 1 lässt sich einfach durch Aufschrauben am Gewinde 32 der Befestigungsvorrichtung 27 in Position bringen. In Fig. 9 ist auch gut zu erkennen, dass sich zwischen der Gewindeschraube 7 und dem Dom 2 des Dombelüfters 1 eine Hutdichtung 33 befindet. Diese Hutdichtung 33 verhindert ein Entweichen von Luft aus dem Belüftungsraum 6 durch einen Spalt zwischen Gewindeschraube 7 und dem Dom 2. Eine besonders gute Abdichtung wird erreicht, wenn die Gewindeschraube 7 bei der Befestigung des Domes 2 mit ihrem Gewinde in die Hutdichtung 33 einschneidet, so dass die Hutdichtung 33 in die Gewindegänge der Gewindeschraube 7 eintaucht.

Die Fig. 10 bis 12 zeigen ausschnittweise einen erfindungsgemäßen Befestigungsvorrichtungsrohling 35 in Schnittdarstellung. Wie in Fig. 10 zu sehen ist, befindet sich zwischen dem Gewinde 32 des Befestigungsvorrichtungsrohlings 35 und dem Auflageflansch 28 eine Umformzone 34, die bei Montage eine Wulst 30 ausbildet. Hierfür ist die Wandstärke in der Umformzone 34 geringer ausgebildet als im Bereich des Auflageflansches 28 und im Bereich des Gewindes 32.

Fig. 11 zeigt eine Detailansicht des Auflageflansches 28, der sich an die Umformzone 34 anschließt. Zusätzlich ist in Fig. 12 ein Befestigungsvorrichtungsrohling 35 in Schnittdarstellung gezeigt. Der rotationssymmetrische Körper weist neben dem Gewinde 32, welches später zur Befestigung des Dombelüfters 1 (Fig. 9) dient, eine dünnwandige Umformzone 34 auf, die bei der Montage eine Wulst 30 ausbildet und den Auflageflansch 28 mit der Unterseite 31 gegen den Belüftungsöffnungsrand 29 drückt und eine Klemmverbindung herstellt.

Natürlich ist die Erfindung nicht auf die dargestellten Ausführungsbeispiele beschränkt. Weitere Ausgestaltungen sind möglich, ohne den Grundgedanken zu verlassen. So ist es beispielsweise auch möglich, dass der Belüftungskanal und das Belüftungsloch einen Durchmesser von wenigstens 16,8 mm bzw. 10 mm aufweisen. Da der Druckverlust invers proportional zum Durchmesser des Belüftungskanals ist, wird durch diesen großen Durchmesser der Strömungswiderstand für die Frischluft minimiert und der Druckverlust reduziert. Im Vergleich zur herkömmlichen Befestigung mittels einer einfachen Gewindeschraube, können die Druckverluste so um bis zu 50% reduziert werden. Dies wiederum führt zu einem energieeffizienteren Betrieb der Kläranlage und senkt somit die laufenden Betriebskosten erheblich.

### Bezugszeichenliste:

- 1: Dombelüfter
- 2: Dom
- 3: erste Bohrung
- 4: Teller
- 5: zweite Bohrung
- 6: Belüftungsraum
- 7: Gewindeschraube
- 8: Distanzstück
- 8a: oberes Ende
- 8b: unteres Ende
- 9: Belüftungskanal
- 10a: Belüftungsloch
- 10b: Belüftungsloch
- 10c: Belüftungsloch
- 11: Gewindebohrung
- 12a: Abzweigungskanal
- 12b: Abzweigungskanal
- 12c: Abzweigungskanal
- 13: horizontale Achse
- 14: Sensor
- 15: Schraubenspitze
- 16: Belüftungsrohr
- 17: Belüftungsöffnung
- 18: vertikale Achse
- 19: Längsachse
- 20: Winkel
- 21: Signalleitung
- 22: Strömungsteiler
- 23: Hauptkanal
- 24: Nebenkanal
- 25: Verjüngung
- 26: Rippe
- 27: Befestigungsvorrichtung
- 28: Auflageflansch
- 29: Rand, Belüftungsöffnungsrand
- 30: Wulst
- 31: Unterseite
- 32: Gewinde
- 33: Hutdichtung
- 34: Umformzone
- 35: Befestigungsvorrichtungsrohling

## Patentansprüche

1. Dombelüfter (1), wobei dieser einen Dom (2) mit einer ersten Bohrung (3) und einen Teller (4) mit einer zweiten Bohrung (5) aufweist, wobei der Dom (2) und der Teller (4) einen Belüftungsraum (6) bilden und die erste Bohrung (3) eine Gewindeschraube (7) aufnimmt, wobei die zweite Bohrung (5) ein hülsenförmiges Distanzstück (8) mit einem Belüftungskanal (9) aufnimmt und das Distanzstück (8) in den Belüftungsraum (6) ragt,
**dadurch gekennzeichnet,**
**dass** das Distanzstück (8) wenigstens ein in den Belüftungsraum (6) mündendes Belüftungsloch (10a) aufweist, wobei das Belüftungsloch (10a) mit dem Belüftungskanal (9) verbunden ist und das Distanzstück (8) in Einbaulage oberhalb des Belüftungslochs (10a) eine Gewindebohrung (11) aufweist, welche die Gewindeschraube (7) aufnimmt, wobei der Durchmesser des Belüftungskanals (9) und des Belüftungslochs (10a) mindestens so groß ist wie der Durchmesser der Gewindeschraube (7).

2. Dombelüfter nach Anspruch 1,
**dadurch gekennzeichnet,**
**dass** der Belüftungskanal (9) in die Gewindebohrung (11) übergeht.

3. Dombelüfter nach Anspruch 1 oder 2,
**dadurch gekennzeichnet,**
**dass** der Belüftungskanal (9) in Einbaulage vertikal verläuft.

4. Dombelüfter nach einem oder mehreren der Ansprüche 1 bis 3,
**dadurch gekennzeichnet,**
**dass** das Distanzstück (8) mindestens zwei Belüftungslöcher (10a,10b) aufweist, die mit dem Belüftungskanal (9) verbunden sind.

5. Dombelüfter nach einem oder mehreren der Ansprüche 1 bis 4,
**dadurch gekennzeichnet,**
**dass** in Einbaulage wenigstens ein Belüftungsloch (10a,10b) seitlich am Distanzstück (8) angeordnet ist.

6. Dombelüfter nach einem oder mehreren der Ansprüche 1 bis 5,
**dadurch gekennzeichnet,**
**dass** wenigstens eines der Belüftungslöcher (10a,10b) durch einen Abzweigungskanal (12) mit dem Belüftungskanal (9) verbunden ist, wobei der Abzweigungskanal (12) in Einbaulage horizontal verläuft.

7. Dombelüfter nach einem oder mehreren der Ansprüche 1 bis 5,
**dadurch gekennzeichnet,**
**dass** wenigstens eines der Belüftungslöcher (10a,10b) durch einen Abzweigungskanal (12a,12b) mit dem Belüftungskanal (9) verbunden ist, wobei der Abzweigungskanal (12a,12b) in Einbaulage unter einem Winkel zur horizontalen Achse (13) verläuft.

8. Dombelüfter nach einem oder mehreren der Ansprüche 1 bis 7,
**dadurch gekennzeichnet,**
**dass** wenigstens ein Sensor (14) an oder in einem Belüftungsloch (10a,10b) angeordnet ist.

9. Dombelüfter nach einem oder mehreren der Ansprüche 1 bis 8,
**dadurch gekennzeichnet,**
**dass** die in den Belüftungsraum (6) hineinragende Schraubenspitze (15) der Gewindeschraube (8) kegelförmig, halbkugelförmig, kegelstumpfförmig oder konvex ausgebildet ist.

10. Dombelüfter nach einem oder mehreren der Ansprüche 1 bis 9,
**dadurch gekennzeichnet,**
**dass** im Belüftungsraum (6) des Distanzstückes (8) ein Strömungsteiler (22) eingesetzt ist, der einen Hauptkanal (23) sowie wenigstens zwei Nebenkanäle (24) aufweist, wobei der Hauptkanal (23) sich im Wesentlichen parallel zur vertikalen Achse (18) erstreckt und in die beiden Nebenkanäle (24) übergeht, die sich im Wesentlichen quer zur vertikalen Achse (18) erstrecken und in den Belüftungslöchern (10a,10b) münden.

11. Dombelüfter nach Anspruch 10,
**dadurch gekennzeichnet,**
**dass** der Hauptkanal (23) des Strömungsteilers (22) eine Verjüngung (25) aufweist.

12. Dombelüfter nach Anspruch 10 oder 11,
**dadurch gekennzeichnet,**
**dass** der Strömungsteiler (22) aus Kunststoff ist.

13. Dombelüfter nach einem oder mehreren der Ansprüche 1 bis 12,
**dadurch gekennzeichnet,**
**dass** der Dombelüfter (1) eine Befestigungsvorrichtung (27) aufweist, die in die Belüftungsöffnung (17) formschlüssig und/oder kraftschlüssig eingeklemmt ist, wobei die Befestigungsvorrichtung (27) einen Auflageflansch (28) aufweist, wobei die in Einbaulage untere Seite (31) des Auflageflansches (28) auf einem Rand (29) der Belüftungsöffnung (17) aufliegt.

14. Dombelüfter nach Anspruch 13,
**dadurch gekennzeichnet,**
**dass** die Befestigungsvorrichtung (27) eine außenseitige Wulst (30) aufweist, mit welcher diese in der Belüftungsöffnung (17) festgelegt ist.

15. Dombelüfter nach Anspruch 14,
**dadurch gekennzeichnet,**
**dass** die Wulst (30) so ausgebildet ist, dass sie den Belüftungsöffnungsrand (29) in Einbaulage von unten umschließt und den Belüftungsöffnungsrand (29) gegen die Unterseite (31) des Auflageflansches (28) drückt.
